# EUROPÄISCHE PATENTSCHRIFT

(11) **EP 0 935 869 B1**
(45) Veröffentlichungstag und Bekanntmachung des Hinweises auf die Patenterteilung: **13.06.2001**
(21) Anmeldenummer: 96938041.9
(22) Anmeldetag: 31.10.1996
(51) Int. Cl.: H04M 3/38, H04M 15/00, G07F 7/10

(54) **VERFAHREN ZUR MISSBRAUCHSERSCHWERUNG BEI KOMMUNIKATIONSDIENSTEN**
METHOD OF RENDERING MISUSE OF COMMUNICATION SERVICES MORE DIFFICULT
PROCEDE POUR RENDRE TOUTE EVENTUELLE UTILISATION FRAUDULEUSE DIFFICILE DANS DES SERVICES DE TELECOMMUNICATIONS

(30) Priorität: 02.11.1995 EP 95117273
(43) Veröffentlichungstag der Anmeldung: 18.08.1999
(73) Patentinhaber: SIEMENS AKTIENGESELLSCHAFT, 80333 München (DE)
(72) Erfinder: LUEDER, Reinhard, D-83607 Holzkirchen (DE); ZYGAN-MAUS, Renate, D-81477 München (DE)
(86) Internationale Anmeldenummer: EP9604757
(87) Internationale Veröffentlichungsnummer: WO9716914

(56) Entgegenhaltungen:
- US-A- 4 799 255
- NTZ , Bd. 45, Nr. 4, April 1992, BERLIN, DE, Seiten 254-261, XP000303522 F. KRÜGER: "Das Intelligente Netz ermöglicht neue Dienste und Anwendungen"

## Beschreibung

Für manche Kommunikationsdienste, die z.B. mit Hilfe des Intelligenten Netzes (IN) realisiert werden, wie z.B. Virtual Card Calling (VCC), Universal Personal Telecommunication (UPT), Remote Access zu Virtual Private Network (VPN) und Multimediadienste werden Authentisierungsverfahren verwendet, um die Zugangsberechtigung des Anrufers zum Kommunikationsdienst zu prüfen und ihm die Gebühren zuzuordnen.

Solche Authentisierungsverfahren beruhen üblicherweise auf der Eingabe einer Benutzeridentifikation (z.B. einer Kartennummer) und gegebenenfalls zusätzlich einer Persönlichen Identifikationsnummer (PIN). Diese Authentisierungsdaten muß der Benutzer geheim halten.

Die genannten Authentisierungsverfahren können nur eine begrenzte Sicherheit bieten. Gültige Authentisierungsdaten können nämlich prinzipiell durch das Durchprobieren einer größeren Anzahl von Daten ermittelt und dann mißbräuchlich verwendet werden, z.B. um Kommunikationsvorgänge auf Kosten eines anderen durchzuführen.

Wenn dieser Mißbrauch (illegale Benutzung) durch das Verwenden von Nummern mit großer Stellenzahl erschwert werden soll, entstehen Akzeptanzprobleme, weil dann bei normaler Benutzung (legale Benutzung) sehr lange Eingaben notwendig sind.

Ein Erschweren von Mißbrauch könnte prinzipiell auch durch das Vergebühren von erfolglosen Authentisierungsvorgängen bewirkt werden. Diese Vergebührung könnte allerdings nicht, wie eigentlich erwünscht, zu Lasten des Benutzers erfolgen, da dieser zum Zeitpunkt erfolgloser Authentisierungsvorgänge noch nicht identifiziert ist. Eine Vergebührung stattdessen zu Lasten des benutzten Anschlusses ist andererseits für die legale Benutzung dieser Dienste unerwünscht, weil sie im Widerspruch zum Vergebührungsprinzip dieser Dienste steht. Der benutzte Anschluß soll nämlich nach diesem Vergebührungsprinzip gebührenfrei bleiben, weil der benutzte Anschluß bei diesen Diensten einem Dritten gehören kann.

Die Folge des Gesagten ist, daß, z.B. gesteuert durch einen PC, mißbräuchlich (mit Aussicht auf Erfolg) tausende von Authentisierungsversuchen automatisch durchgeführt werden können, ohne daß dem mißbrauchenden Anrufer (illegaler Benutzer) dafür Gebühren entstehen. Der Mißbrauch kann somit kommerziell ausgeübt werden.

Durch den Umstand, daß erfolglose Authentisierungsvorgänge gebührenfrei sind, wird auch noch ein weiterer Mißbrauchsfall erleichtert. Aus Sicherheitsgründen wird üblicherweise der Dienstzugang für einen Benutzer blockiert, wenn unter seiner Identifikation eine vorgegebene Anzahl von PIN-Fehleingaben überschritten wird. Böswillige können dies benutzen, um vorsätzlich - und ohne daß ihnen dafür Gebühren entstehen - für andere den Dienstzugang zu blockieren.

Der Erfindung liegt die Aufgabe zugrunde, den genannten Mißbrauch zu erschweren, ohne dabei die legale Nutzung der genannten Dienste nennenswert zu beeinträchtigen.

Diese Aufgabe wird durch das erfindungsgemäße Verfahren bzw. die erfindungsgemäße Authentisierungseinrichtung gelöst.

Durch die Erfindung wird folgendes erreicht:
- Der normale Benutzer muß bei Eingabefehlern nur damit rechnen, daß dem von ihm benutzten Anschluß mit einer relativ geringen Wahrscheinlichkeit (von z.B. 1:20) eine Gebühr erhoben wird.
- Im Mißbrauchsfall entsteht dagegen beim Durchprobieren zwangsläufig eine hohe Anzahl von Fehlversuchen. Wenn aufgrund des statistischen Sicherheitsgrades z.B. im Mittel 10000 Fehlversuche notwendig sind, um zufällig eine erfolgreiche Authentisierung zu treffen, und eine Vergebührungswahrscheinlichkeit von z.B. 1:20 vorgegeben ist, dann müssen im Mittel 500 Versuche bezahlt werden. Damit kann der Mißbrauch wirtschaftlich uninteressant werden, insbesondere wenn für die mißbräuchlich ermittelten Konten relativ niedrige Kreditlimits festgelegt sind. Bei höheren Kreditlimits kann entweder der statistische Sicherheitsgrad erhöht oder die Vergebührungswahrscheinlichkeit erhöht werden.

Im folgenden wird ein Ausführungsbeispiel der Erfindung anhand des Ablaufs bei einem Anruf näher erläutert.

Ein Anruf zu einem der eingangs erwähnten Dienste wird zunächst gebührenfrei begonnen. Wenn die Dienststeuerung (bei einem IN im SCP realisiert) einen erfolglosen Authentisierungsversuch erkennt, legt sie zufallsgesteuert fest, ob eine Vergebührung für den vom Anrufer benutzten Anschluß erfolgen soll.

Bei positivem Ergebnis der Zufallssteuerung gibt sie einen Vergebührungsauftrag an die vergebührende Einrichtung, z.B. eine Vermittlungsstelle im Netz. Die Vergebührung wird dabei wirksam bevor der Anrufer das Ergebnis der Authentisierungsprüfung erfährt. Für die Zufallssteuerung wird eine bestimmte Wahrscheinlichkeit vorgegeben, z.B. 1:20.

Damit wird folgendes erreicht:
- Der normale Benutzer muß bei Eingabefehlern nur damit rechnen, daß dem von ihm benutzten Anschluß mit einer relativ geringen Wahrscheinlichkeit (von z.B. 1:20) eine Gebühr erhoben wird.
- Im Mißbrauchsfall entsteht dagegen beim Durchprobieren zwangsläufig eine hohe Anzahl von Fehlversuchen. Wenn aufgrund des statistischen Sicherheitsgrades z.B. im Mittel 10000 Fehlversuche notwendig sind, um zufällig eine erfolgreiche Authentisierung zu treffen, und eine Vergebührungswahrscheinlichkeit von z.B. 1:20 vorgegeben ist, dann müssen im Mittel 500 Versuche bezahlt werden. Damit kann der Mißbrauch wirtschaftlich uninteressant werden, insbesondere wenn für die mißbräuchlich ermittelten Konten relativ niedrige Kreditlimits festgelegt sind. Bei höheren Kreditlimits kann entweder der statistische Sicherheitsgrad erhöht oder die Vergebührungswahrscheinlichkeit erhöht werden.

Die für die Zufallssteuerung vorzugebende Wahrscheinlichkeit kann an den vorhandenen statistischen Sicherheitsgrad einerseits und an die erwartete Benutzerakzeptanz für die Vergebührung von Fehlversuchen andererseits angepaßt werden.

Dieses relativ einfache Verfahren der Mißbrauchserschwerung durch zufallsgesteuerte Vergebührung erfolgloser Authentisierungsversuche ist für sich allein besonders dann gut geeignet, wenn der vorhandene statistische Sicherheitsgrad durch eine größere Stellenzahl für Benutzeridentifikation und/oder PIN relativ hoch ist, so daß im Mißbrauchsfall eine sehr große Anzahl von Authentisierungsversuchen notwendig ist.

Im folgenden wird ein weiteres Verfahren zur Mißbrauchserschwerung näher erläutert, das in Verbindung mit dem vorherigen Verfahren spezielle Vorteile bietet, die später erläutert werden.

Zur Realisierung dieses weiteren Verfahrens wird die Vergebührungseinrichtung, die z.B. in einer Vermittlungstelle im Netz realisiert ist, so ausgestattet, daß sie eine vorläufige wiederaufhebbare Vergebührung vornehmen kann. Diese besondere Vergebührung wird dann wirksam, wenn ein Anruf beendet wird, bevor eine Wiederaufhebung der Vergebührung erfolgt ist.

Der Ablauf des Verfahrens ist wie folgt:

Wenn bei einem Anruf zu einem betreffenden Dienst die Dienststeuerung (im Falle der Dienste-Realisierung mit Hilfe des IN ist diese Steuerung im SCP realisiert) eine vollständige, aber erfolglose Authentisierung erkannt hat, beauftragt sie mit der Aktivierung der vorläufigen wiederaufhebbaren Vergebührung diejenige Vermittlungsstelle, der der Anschluß des Anrufes zugeordnet ist (Die Aktivierung könnte grundsätzlich auch sofort bei Beginn des Anrufes erfolgen. Das ist aber hinsichtlich der Akzeptanz ungünstiger, weil dann vorzeitige Abbrüche gebührenpflichtig werden).

Die Aktivierung wird daraufhin von der beauftragten Vermittlungsstelle durchgeführt, bevor der Anrufer das Ergebnis der Authentisierungsprüfung erfährt (Damit wird sichergestellt, daß der Mißbraucher keine gebührenlose Einzelversuche durchführen kann).

Wenn die Dienststeuerung nachfolgend eine erfolgreiche Authentisierung erkennt, gibt sie den Auftrag zur Wiederaufhebung der Vergebührung und der gesamte Authentisierungsvorgang bleibt gebührenfrei.

Wird ein Anruf nach einer erfolglosen Authentisierung jedoch beendet, ohne daß eine nachfolgende erfolgreiche Authentisierung zu einer Wiederaufhebung der vorläufigen Vergebührung geführt hat, wird der Anruf vergebührt.

Die zulässige Anzahl erfolgloser Authentisierungen innerhalb eines Anrufes wird begrenzt, z.B. auf drei. Wird sie überschritten, so wird der Anruf auf jeden Fall vergebührt. Eine Ausführungsmöglichkeit ist, daß der Anruf dann auch ausgelöst wird.

Damit wird folgendes erreicht:
a) Für den normalen Benutzer (legaler Benutzer), genauer gesagt für den Anschluß, über den der Benutzer den Dienst anruft, bleiben auch weiterhin erfolglose Authentisierungsvorgänge, die durch Eingabefehler bedingt sind, bis zu einer bestimmten Anzahl gebührenfrei, wenn innerhalb desselben Anrufes schließlich doch noch eine erfolgreiche Authentisierung erfolgt.
b) Im Mißbrauchsfall wird die versuchte mißbräuchliche Benutzung dagegen durch die große Anzahl der erfolglosen Authentisierungsvorgänge gebührenpflichtig. Der Mißbrauch wird damit wirtschaftlich uninteressant.

Das erläuterte Verfahren kann selbstverständlich auch so ausgestaltet sein, daß die wiederaufhebbare Vergebührung nicht nach Zeiteinheiten, sondern nach der Zahl von erfolglosen Authentisierungsvorgängen berechnet wird.

Wenn die wiederaufhebbare Vergebührung nach Zeiteinheiten und der Zahl der Versuche erfolgt, kann eine weitere Ausgestaltung darin liegen, daß bereits bei Beginn des Anrufes eine wiederaufhebbare Vergebührung nach Zeiteinheiten erfolgt, wogegen die wiederaufhebbare Vergebührung nach der Zahl der Versuche erst nach einer bestimmten Anzahl von erfolglosen Authentisierungsvorgängen aktiviert wird.

Wenn beide Verfahren, nämlich die zufallsgesteuerte Vergebührung und die wiederaufhebbare Vergebührung, kombiniert werden, verringert sich für den normalen Benutzer die Wahrscheinlichkeit einer Vergebührung bei Eingabefehlern noch weiter. Er muß dann bei Eingabefehlern nurmehr damit rechnen, daß mit der Zufallswahrscheinlichkeit von z.B. 1:20 eine Gebühr erhoben wird, wenn ihm innerhalb desselben Anrufs keine nachfolgende erfolgreiche Authentisierung gelingt.

Leider werden dann auch im Mißbrauchsfall Fehlversuche nur mit der vorgegebenen Zufallswahrscheinlichkeit vergebührt.

Das wird allerdings dann ausreichend sein, wenn der vorhandene statistische Sicherheitsgrad durch eine größere Stellenzahl für Benutzeridentifikation und/oder PIN relativ hoch ist, so daß im Mißbrauchsfall eine sehr große Anzahl von Authentisierungsversuchen notwendig ist.

## Patentansprüche

1. Verfahren zur Mißbrauchserschwerung bei Kommunikationsdiensten, bei denen zum Anruf eines Kommunikationsdienstes benutzerspezifische Authentisierungsdaten eingegeben werden müssen, anhand derer vom Kommunikationsnetz die Authentisierung des Dienste-Benutzers durchgeführt wird,
**dadurch gekennzeichnet, daß**
für den zum Anruf des Kommunikationsdienstes benutzten Netz-Anschluß bei Feststellen einer erfolglosen Authentisierung zufallsgesteuert eine Vergebührung veranlaßt wird, und zwar bevor der Dienste-Benutzer die erfolglose Authentisierung feststellen kann.

2. Dienststeuerungseinrichtung eines Netzes, derart ausgestaltet, daß sie bei einem Anruf eines Benutzers zu einem Kommunikationsdienst eine Authentisierung durchführt, indem sie die vom Benutzer angegebenen Authentisierungsdaten prüft und bei erfolgreicher Authentisierung den Zugang zum Kommunikationsdienst freigibt,
**dadurch gekennzeichnet, daß**
sie für den zur Durchführung des Anrufs benutzten Netz-Anschluß bei Feststellen einer erfolglosen Authentisierung zufallsgesteuert eine Vergebührung veranlaßt, und zwar bevor der Dienste-Benutzer die erfolglose Authentisierung feststellen kann.

## Claims

1. Method for making misuse more difficult in communication services, in which user-specific authentication data must be entered in order to call a communications service, using which data the communications network authenticates the service user,
characterized in that,
on confirmation of unsuccessful authentication for the network connection used for calling the communications service, charging is initiated on a randomly controlled basis, to be precise before the service user can confirm unsuccessful authentication.

2. Service control device for a network, designed in such a manner that, when a user is calling a communications service, said device carries out an authentication process by checking the authentication data stated by the user and, if the authentication is successful, enabling access to the communications service,
characterized in that,
on confirming unsuccessful authentication for the network connection used for making the call, charging is initiated on a randomly controlled basis, to be precise before the service user can confirm unsuccessful authentication.

## Revendications

1. Procédé pour rendre difficile toute utilisation illicite dans des services de communication, dans lesquels, pour appeler un service de communication, il doit être entré des données d'authentification spécifiques à un utilisateur à l'aide desquelles l'authentification de l'utilisateur des services est effectuée par le réseau de communication, caractérisé en ce que, pour le raccordement au réseau utilisé pour appeler le service de communication, une taxation est provoquée d'une manière commandée de façon aléatoire en cas de constatation d'une authentification sans succès, et cela avant que l'utilisateur des services puisse constater l'authentification sans succès.

2. Dispositif de commande de services d'un réseau, réalisé de telle manière que, lors d'un appel d'un utilisateur à un service de communication, il effectue une authentification en vérifiant les données d'authentification indiquées par l'utilisateur et en libérant l'accès au service de communication en cas d'authentification réussie, caractérisé en ce qu'il provoque pour le raccordement au réseau utilisé pour effectuer l'appel, en cas de constatation d'une authentification sans succès, une taxation d'une manière commandée de façon aléatoire, et cela avant que l'utilisateur du service puisse constater l'authentification sans succès.
